# EUROPÄISCHE PATENTSCHRIFT

(11) **EP 3 434 450 B1**
(45) Veröffentlichungstag und Bekanntmachung des Hinweises auf die Patenterteilung: **13.05.2020**
(21) Anmeldenummer: 18195329.0
(22) Anmeldetag: 22.10.2014
(51) Int. Cl.: B29C 64/386, B29C 64/153, B22F 3/105

(54) **VERFAHREN UND VORRICHTUNG ZUM HERSTELLEN EINES DREIDIMENSIONALEN BAUTEILS**
METHOD AND DEVICE FOR PRODUCING A THREE-DIMENSIONAL COMPONENT
PROCÉDÉ ET DISPOSITIF DE FABRICATION D'UN COMPOSANT TRIDIMENSIONNEL

(30) Priorität: 28.10.2013 DE 102013017792
(43) Veröffentlichungstag der Anmeldung: 30.01.2019
(62) Teilanmeldung aus: 14809753.8
(73) Patentinhaber: CL Schutzrechtsverwaltungs GmbH, 96215 Lichtenfels (DE)
(72) Erfinder: Herzog, Frank, 96215 Lichtenfels (DE)
(74) Vertreter: Hafner & Kohl PartmbB

(56) Entgegenhaltungen:
- WO-A1-2008/096105
- WO-A1-2012/102655
- WO-A1-2013/021173
- US-A1- 2011 061 591

## Beschreibung

Die Erfindung betrifft ein Verfahren zum Herstellen eines dreidimensionalen Bauteils durch ein Elektronenstrahl-, Lasersinter- oder Laserschmelzverfahren, bei welchem das Bauteil durch aufeinanderfolgendes Verfestigen vorgegebener Abschnitte einzelner Schichten aus durch Einwirkung einer Elektronen- oder Laser-Strahlung verfestigbarem Baumaterial durch Aufschmelzen des Baumaterials erfolgt, mit den weiteren Merkmalen des Oberbegriffes des Anspruches 1.

Darüber hinaus betrifft die Erfindung eine Vorrichtung zur selektiven Laserpulververarbeitung, welche dazu ausgebildet ist, das Verfahren zum Herstellen des dreidimensionalen Bauteils auszuführen.

Die WO 2013/021173 A1 offenbart ein Verfahren zum Herstellen eines dreidimensionalen Bauteils gemäß dem Oberbegriff des Anspruchs 1. Aus dem Stand der Technik sind Verfahren bekannt, die üblicherweise als Lasersinter- oder Laserschmelzverfahren bezeichnet werden. Bei derartigen Verfahren werden Schichten aus Baumaterial aufgetragen, die durch Einwirkung von Strahlung, insbesondere Elektronen- oder Laserstrahlung zur Verfestigung an den dem Querschnitt des herzustellenden Objektes entsprechenden Stellen lokal erhitzt werden. Dabei erfolgt ggf. eine Verbindung mit einer darunterliegenden Schicht. Zur Bestrahlung wird typischerweise ein Fokuspunkt des Laserstrahls entlang eines Abtastpfades geführt, welcher derart gewählt wird, dass der Querschnitt des herzustellenden Objektes vollständig überdeckt wird.

Entsprechend weisen derartig ausgebildete Vorrichtungen zur selektiven Laserpulververarbeitung eine Bauplattform zur Aufnahme eines Pulverbetts aus verfestigbarem Baumaterial, ein Pulverbeschichtungssystem zum Auftragen einer Pulverschicht auf die Bauplattform, eine Laserstrahlungsquelle zur Bereitstellung des fokussierten Laserstrahls, eine Abtasteinrichtung zur Führung des fokussierten Laserstrahls entlang des Abtastpfades und eine Steuerungseinrichtung auf. Die Steuereinrichtung ist zur Steuerung der Laserstrahlungsquelles in Abhängigkeit von Baudaten ausgebildet, die die dreidimensionale Gestalt des herzustellenden Objektes charakterisieren, sie umfasst elektronische Speichermedien die mit einem Scanner zur Ablenkung des Laserstrahls zusammenwirken.

Obwohl sich derartige Elektronenstrahlschmelz bzw. -Sinterverfahren oder Laserschmelz- bzw. Lasersinterverfahren als effiziente Mittel zur Herstellung von Bauteilen erwiesen haben, hat es sich als nachteilig erwiesen, wenn während der Herstellung des Objektes große Temperaturgradienten in der zu verfestigenden Schicht. Derartig hohe Temperaturgradienten können zur Erzeugung von Rissen im hergestellten Material führen und beeinträchtigen im Allgemeinen die Qualität des hergestellten Objektes. Zudem kann eine lokale Überhitzung auftreten, die dazu führt, dass das vom Laserstrahl erzeugte lokale Schmelzbett größere Dimensionen annimmt als ursprünglich vorgesehen. Dies beeinträchtigt die Genauigkeit des Herstellungsverfahrens bzw. führt dazu, dass Materialunebenheiten wie Grate und dgl. entstehen, die nach Herstellung des Objekts aufwendig entfernt werden müssen.

Es ist daher vorteilhaft, wenn die Temperatureinwirkung, die durch den Laserstrahl verursacht wird, während der Herstellung des dreidimensionalen Objekts möglichst gleichmäßig erfolgt. Dazu schlägt US 2004/0200816A1 vor, zumindest einen thermographischen Detektor zur Erfassung von Datensätzen vorzusehen, welche Temperaturprofile von aus verfestigtem Baumaterial bestehende Schichten zumindest abschnittsweise charakterisieren. Zur Angleichung der auftretenden Temperaturgradienten wird eine Heizeinrichtung entsprechend gesteuert bzw. Prozessparameter des Lasers, insbesondere die Abtastgeschwindigkeit und/oder die Laserleistung angepasst, um die Temperaturen über die Beschichterebene zu kontrollieren.

Ausgehend von diesem Stand der Technik ist es Aufgabe der vorliegenden Erfindung, ein Verfahren anzugeben, bei dem lokale Überhitzungen des aufgetragenen Baumaterials vermieden und bei der Herstellung auftretende Temperaturgradienten minimiert werden. Ferner ist es Aufgabe der Erfindung, eine Vorrichtung anzugeben, die zur effizienten Durchführung dieses Verfahrens geeignet ist.

Die Aufgabe wird durch ein Verfahren der eingangs genannten Art mit den charakteristischen Merkmalen des Patentanspruchs 1 gelöst. Hinsichtlich der Vorrichtung wird die Aufgabe gelöst von einer Vorrichtung zur selektiven Laserverarbeitung, die dazu ausgebildet ist, das erfindungsgemäße Verfahren durchzuführen.

Bei einem Verfahren zum Herstellen eines dreidimensionalen Bauteils durch ein Elektronenstrahl-, Lasersinter- oder Laserschmelzverfahren wird zumindest ein Datensatz generiert, der das Temperaturprofil zumindest einer unmittelbar unter der zu bestrahlenden oberen Schicht zumindest abschnittsweise charakterisiert. Alternativ oder zusätzlich dazu werden Datensätze generiert, die die Temperaturprofile der unter der oberen Schicht liegenden Schichten zumindest abschnittsweise charakterisieren. Zur Generierung der Datensätze ist eine thermographische Erfassung der Bestrahlungsebene vorgesehen. Bei Bestrahlung der oberen Schicht wird zur Erzeugung eines weitgehend homogenen Temperaturprofils ein Fokuspunkt des Laserstrahls entlang eines Abtastpfades geführt, der in Abhängigkeit des oder der thermographisch erfassten Datensätze gewählt wird. Insbesondere ist vorgesehen, Bereiche, welche eine hohe Temperatur aufgrund von vorheriger Bestrahlungseinwirkung aufweisen, beim Bestrahlen der oberen Schicht zunächst auszulassen und an anderen Stellen mit dem Bestrahlungsvorgang fortzufahren.

In komplexeren Fällen werden durch die thermographische Erfassung Bereiche identifiziert, in denen erhöhte Temperaturen vorherrschen, insbesondere höhere Temperaturen im Vergleich zu den in den umliegenden Bereichen vorherrschenden Temperaturen. Hierbei handelt es sich also um lokale Temperaturmaxima, die erfasst werden. Der Abtastpfad wird derart gewählt, dass zunächst diese umliegenden Bereiche bestrahlt werden, sodass eine Angleichung des Temperaturgradienten erfolgen kann. Gleichzeitig erfolgt im heißen Bereich eine Dissipation von Wärme beispielsweise durch Wärmeübertragung an die Umgebung durch Konvektion. Infolgedessen wird der zwischen den Bereichen vorherrschende Temperaturgradient angeglichen und eine Bestrahlung des vormals zu heißen Bereiches kann nach Abschluss der Bestrahlung der umliegenden Bereiche erfolgen, ohne dass eine Gefahr der Überhitzung, bei der eine zu große Schmelzzone entstehen könnte, besteht.

Vorzugsweise wird die Bestrahlung der oberen Schicht derart gesteuert, dass ein vom Laserstrahl vermittelter Energieeintrag pro Flächenabschnitt auf die obere Schicht des aufgetragenen pulverförmigen Aufbaumaterials in Abhängigkeit des Datensatzes bzw. der Datensätze angepasst wird, welche die Temperaturprofile der unter der oberen Sicht liegenden Schichten zumindest abschnittsweise charakterisieren. Es ist somit vorgesehen, zusätzlich zur Anpassung des Abtastpfades an das erfasste Temperaturprofil bzw. an die erfassten Temperaturprofile eine Anpassung von den Energieeintrag pro Flächenabschnitt verändernden Prozessparametern vorzunehmen, um einer zu starken lokalen Erhitzung weiter entgegen zu wirken.

Prozessparameter, die zur Anpassung des Energieeintrags pro Flächenabschnitt verändert werden, umfassen vorzugsweise eine Abtastgeschwindigkeit des Laserstrahls, eine Größe des Fokuspunktes, eine Laserpulsfrequenz, eine Laserpulsdauer und/oder eine Laserleistung.

Es ist somit vorgesehen, die Bestrahlung der Schichten gemäß alternativer Ausführungsformen mittels gepulster oder kontinuierlicher Laserbestrahlung vorzunehmen. Es versteht sich, dass die entsprechenden Vorrichtungen derart ausgebildet sind, dass diese Prozessparameter entsprechend veränderbar sind. So ist insbesondere die Laserpulsfrequenz, die Laserpulsdauer und/oder die Laserleistung eines zur Bereitstellung des Laserstrahls ausgebildeten Laserstrahlungsquelle regulierbar. Eine zur Ablenkung des Laserstrahls und Führung des Fokuspunkts über die zu bestrahlenden Bereiche der oberen Schicht ausgebildeten Abtasteinrichtung weist entsprechend eine zur Anpassung der Größe des Fokuspunktes geeignete Optik auf.

In einer bevorzugten Ausgestaltung wird der Beginn der Bestrahlung eines Abschnitts der oberen Schicht um ein vorgegebenes oder vorgebbares Zeitintervall verzögert, welches in Abhängigkeit des das Temperaturprofil der unmittelbar darunterliegenden Schicht zumindest abschnittsweise charakterisierenden Datensatzes oder in Abhängigkeit der die Temperaturprofile der darunterliegenden Schichten zumindest abschnittsweise charakterisierenden Datensätze gewählt wird. Identifiziert somit die thermographische Erfassung Bereiche mit hoher Temperatur bzw. Regionen mit hohen Temperaturgradienten, so wird eine Bestrahlung der oberen Schicht in diesen Bereichen zunächst zurückgestellt. Dabei ist vorgesehen, die Dauer des die Bestrahlung verzögernden Zeitintervalls in Abhängigkeit einer erfassten Maximaltemperatur bzw. in Abhängigkeit eines maximalen Temperaturgradienten zu wählen, um eine bestmögliche Anpassung der Temperaturen zu erreichen.

Entsprechend ist in Weiterbildung der Erfindung vorgesehen, die Bestrahlung des Abschnitts der oberen Schicht so lange zu verzögern, bis die Temperatur des Abschnitts der oberen Schicht, welche maßgeblich durch die Temperaturprofile der darunter angeordneten Schicht oder Schichten bestimmt ist, unter einen vorgebbaren Schwellwert gesunken ist. Ein derartiges Verfahren ist mittels einer entsprechend ausgestalteten Steuereinrichtung mit logischen Schaltkreisen, Prozessoren oder dgl. vollständig automatisch durchführbar. Die Erfassung der thermographischen Datensätze erfolgt vorzugsweise zeitgleich mit dem Herstellungsprozess, sodass der Bestrahlungsvorgang des Abschnitts eingeleitet werden kann, sobald die Temperatur unter den vorgebaren Schwellwert gesunken ist.

Die Erfassung des zumindest einen Temperaturprofils erfolgt mittels eines thermographischen Detektors, der deshalb von einer eine Bauplattform aufweisende Baukammer angeordnet ist und die Bestrahlungseben zumindest bereichsweise erfasst.

In einem bevorzugten Ausführungsbeispiel wird das Temperaturprofil des die jeweilige Schicht charakterisierende Datensatzes abschnittsweise mittels eines beweglich gelagerten thermographischen Detektors erfasst, welche über die gesamte Bestrahlungsfläche bewegbar ist. Der thermographische Detektor ist wie ein Scankopf einer Scaneinrichtung unabhängig von der Ausrichtung der Abtastvorrichtung des Laserstrahls bewegbar, sodass bei Bedarf auch Bereiche der oberen Schicht erfasst werden können, die außerhalb der Umgebung um den Fokuspunkt liegen. Diese Bereiche haben sich aufgrund der seit der Bestrahlung bereits verstrichenen Zeit im Allgemeinen weiter abgekühlt, was insbesondere für die Wahl des Ausgangspunktes des Abtastpfades zur Bestrahlung der nächsten Schicht von Bedeutung sein kann.

In einem alternativen bevorzugten Ausführungsbeispiel wird das Temperaturprofil des die jeweilige Schicht charakterisierende Datensatzes mittels eines stationären thermographischen Detektors erfasst, der oberhalb der Bestrahlungsfläche angeordnet ist und diese in ihrer Gesamtheit erfasst. Ein derartig ausgebildeter thermographischer Sensor ermöglicht somit die Erfassung der Stellen, die dem Querschnitt des herzustellenden Objektes entsprechen in ihrer Gesamtheit. Die so erfassten Datensätze beinhalten somit eine thermographische Momentaufnahme der oberen Schicht, die zur Optimierung des Abtastpfades hinsichtlich der Erzeugung eines homogenen Temperaturprofils berücksichtigt wird.

Vorzugsweise umfassen die thermographischen Datensätze, die durch den beweglichen oder den stationären thermographischen Detektor erfasst werden, Bilddaten, die insbesondere während der generativen Herstellung des dreidimensionalen Objekts über eine Anzeigeeinheit ausgegeben werden. Dem Bedienpersonal stehen somit sämtliche thermographischen Informationen zur Verfügung, sodass bei Bedarf manuell in den Herstellungsprozess eingegriffen werden kann. Die Ausgabe der unterschiedlichen, erfassten Temperaturen kann über eine geeignete Farbkodierung erfolgen.

Es ist vorgesehen, den das Temperaturprofil der jeweiligen Schicht charakterisierenden Datensatz bei Bestrahlung der jeweiligen Schicht zu erfassen. Entsprechend erfolgt die thermographische Erfassung zeitgleich mit dem Bestrahlungsvorgang, um den Zeitaufwand zu minimieren.

In einem alternativen Ausführungsbeispiel ist vorgesehen, den das Temperaturprofil der jeweiligen Schicht charakterisierende Datensatz zu erfassen, nachdem die jeweilige Schicht bestrahlt wurde und nachdem eine Pulverschicht aus unverfestigtem Baumaterial darüber aufgetragen wurde, aus dem die darauffolgende Schicht des Bauteils in einem weiteren Verfahrensschritt zu bilden ist. Dies hat den Vorteil, dass die thermographische Erfassung eine Dissipation von Wärme in die darüber angeordnete, aus Pulvermaterial bestehende Schicht beinhaltet. Dementsprechend kann eine vorgegebene Zeitspanne nach dem Auftragen der neuen oberen Pulverschicht vorggebbar sein, nach der erst die Aufnahme der thermographischen Messdaten beginnt. Dadurch steht ausreichender Zeit zur Dissipation der Wärme zur Verfügung.

Die bisherigen Ausführungen zielen darauf ab, ein Verfahren anzugeben, mit dem der Bauvorgang eines einzigen Bauteils optimiert werden kann. Die generativen Bauverfahren wie das Elektronenstrahl- oder Lasersintern oder Laserschmelzen werden aber verstärkt auch dazu verwendet, Serienprodukte herzustellen. Vorzugsweise kann daher vorgesehen sein die thermographischen Datensätze wenigstens eines Bauteils in einer Speichereinrichtung abzuspeichern und wenigstens einen der thermographischen Datensätze zu verwenden, die Bestrahlung einer Schicht eines zeitlich später angefertigten Bauteils zu steuern. Das Wissen eines vorherigen Bauvorgangs wird also genutzt, um den nächsten Bauvorgang zu verbessern. Dies ist insbesondere bei identischen oder wenigstens teilweise identischen Bauteilen interessant.

Dabei werden bevorzugt beim Bestrahlen einer Schicht diejenigen thermographischen Datensätze berücksichtigt, die im Rahmen des Bauvorgangs der bestrahlten Schicht oder einer folgenden Schicht entsprechen. Damit ist gemeint, dass beim Bestrahlen bspw. der zweiten Schicht eines Bauteils die thermographischen Datensätze der zweiten und/oder der dritten Schicht eines oder mehrerer vorher angefertigter Bauteile berücksichtigt werden. Die Berücksichtigung der identischen Schichtzahl bewirkt eine Beschleunigung in der Berechnung bzw. beschleunigten Vorgabe des Abtastpfades, da lokale Temperaturmaxima bereits als bekannt angesehen werden. Abtastpfade können also schichtabhängig vorausberechnet werden. Die Berücksichtigung wenigstens einer folgenden Schicht, also bspw. der dritten Schicht, ermöglicht dagegen die vorausschauende Vermeidung von zu starken Temperaturgradienten in der folgenden Schicht.

Die vorher angefertigten Bauteile können gleichzeitig und/oder nacheinander angefertigt worden sein. Bei der Berücksichtigung der thermographischen Datensätze gleichzeitig angefertigter Bauteile kann eine Mittelung der Temperaturinformationen der einzelnen Datensätze vorgenommen werden, um statistische Schwankungen herauszumitteln. Durch die Berücksichtigung der thermographischen Datensätze nacheinander angefertigter Bauteile kann eine Verbesserung des Abtastpfades dahingehend erreicht werden, dass eine sukzessive Verbesserung des Abtastpfades adaptiert wird. D.h. dass zuerst die thermographischen Datensätze eines zuerst angefertigten Bauteils verwendet werden, um die Abtastpfade des nächsten Bauteils, also des zweiten, zu verbessern. Genauso werden die thermographischen Datensätze des zweiten Bauteils zur Verbesserung, d.h. zur Vermeidung von Temperaturgradienten und/oder lokalen Temperaturspitzen, eines dritten Bauteils verwendet. Statt diese Anpassung bzw. Verbesserung bis zum bspw. zehnten Bauteil zu durchlaufen können auch die thermographischen Datensätze mehrerer, z. B. des ersten, zweiten und dritten nacheinander angefertigten Bauteils berücksichtigt werden. Dies kann rein exemplarisch durch eine zeitreihengestützte Analyse der thermographischen Datensätze geschehen.

Mit besonderem Vorteil können die thermographischen Datensätze mehrerer gleichzeitig angefertigter Bauteile und dies aufeinanderfolgend berücksichtigt werden. Dadurch kann die Adaption des Abtastpfades unter Vermeidung statistischer Abweichungen weiter optimiert werden.

Eine zur Ausführung des erfindungsgemäßen Verfahrens ausgebildete Vorrichtung zur selektiven Laserpulververarbeitung umfasst eine vorzugsweise höhenverstellbare Bauplattform zur Aufnahme eines Pulverbetts aus verfestigbarem Baumaterial, ein Pulverbeschichtungssystem zum Auftragen einer Pulverschicht auf die Bauplattform, der Laserstrahlungsquelle zur Bereitstellung des fokussierten Laserstrahls, welcher auf die Pulverschicht zur selektiven Verfestigung des Baumaterials auftrifft, die Abtasteinrichtung zur Führung des fokussierten Laserstrahls entlang des Abtastpfades, den - beweglich gelagerten oder stationären - thermographischen Detektor zur Erfassung der Datensätze, welche die Temperaturprofile von aus verfestigtem Baumaterial bestehende Schichten zumindest abschnittsweise charakterisieren und eine Steuereinrichtung zur Steuerung der Laserstrahlungsquelle in Abhängigkeit der erfassten Datensätze.

Die Datensätze sind in einer Speichereinrichtung ablegbar, die mit der Steuereinrichtung und der Abtasteinrichtung derart in einer Wirkverbindung steht, dass der Abtastpfad zur Herstellung der oberen Schicht in Abhängigkeit des Datensatzes steuerbar ist, der das Temperaturprofil der unmittelbar unter der zu bestrahlenden oberen Schicht liegenden Schicht zumindest abschnittsweise charakterisiert oder der Abtastpfad in Abhängigkeit der Datensätze steuerbar ist, die die Temperaturprofile der unter der zu bestrahlenden oberen Schicht liegenden Schichten zumindest abschnittsweise charakterisieren. Eine derartige ausgebildete Vorrichtung ermöglicht die effiziente Implementierung des erfindungsgemäßen Verfahrens, sodass eine Herstellung von qualitativ hochwertigen Objekten bzw. Bauteilen ermöglicht ist.

In einem bevorzugten Ausführungsbeispiel der Erfindung ist zur Erfassung des das Temperaturprofil der jeweiligen Schicht charakterisierende Datensatzes ein beweglich gelagerter Detektor vorgesehen, welcher nach Art eines Scankopfes über die gesamte Bestrahlungsfläche unabhängig von der Bewegung der Abtasteinrichtung bewegbar ist. Dies ermöglicht die selektive Erfassung von Bereichen der Bestrahlungsebene, die außerhalb der unmittelbaren Umgebung des Fokuspunktes liegen.

Als thermographische Detektoren können jedwede Sensoren vorgesehen werden, die zur Erfassung von Infrarotstrahlung ausgeschildert sind, wie insbesondere Halbleitersensoren, Wärmebildkameras oder dgl.

Im Folgenden wird die Erfindung anhand von konkreten Ausführungsbeispielen, die in Zeichnungsfiguren dargestellt sind, näher erläutert. Dabei zeigen:
- Fig. 1: einen schematischen Aufbau einer Vorrichtung zur selektiven Laserpulververarbeitung gemäß einem ersten Ausführungsbeispiel der Erfindung,
- Fig. 2: einen schematischen Aufbau einer Vorrichtung zur selektiven Laserpulverarbeitung gemäß einem zweiten Ausführungsbeispiel der Erfindung,
- Fig. 3: eine Draufsicht auf eine Bestrahlungsebene, wobei ein Abtastpfad eines Lasterstrahls in Abhängigkeit von Datensätzen gewählt ist, die die Temperaturprofile von unter der Bestrahlungsebene liegende Schichten charakterisieren.

Einander entsprechende Teile sind in allen Zeichnungsfiguren mit den gleichen Bezugszeichen versehen.

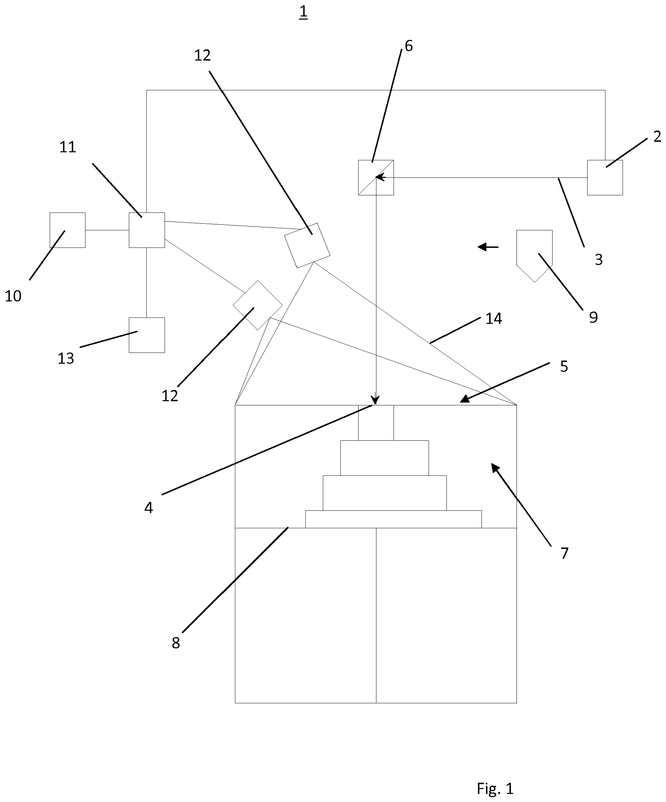

Figur 1 zeigt eine Vorrichtung zur selektiven Laserpulververarbeitung, die dazu ausgebildet ist, einen Bestrahlungsvorgang in Abhängigkeit von thermographisch erfassten Daten zu steuern. Die Vorrichtung 1 umfasst eine Laserstrahlungsquelle 2 zur Bereitstellung eines Laserstrahls 3. Zur Führung eines Fokuspunkts 4 des Laserstrahls 3 über eine Bestrahlungsebene 5 ist eine Abtasteinrichtung 6 mit einer entsprechenden Optik, wie insbesondere Linsen, Spiegeln oder dgl. ausgestattet. In einer Baukammer 7, die nach unten von einer höhenverstellbaren Bauplattform 8 begrenzt ist, sind Pulverschichten aus Baumaterial anordbar, welche durch Einwirkung des Laserstrahls 3 verfestigbar sind.

Zum schichtweisen Aufbringen von Baumaterial in die Baukammer 7 bzw. auf die Bauplattform 8 ist ein Pulverbeschichtungssystem 9 vorgesehen, welches einen Dosierbehälter zur Aufnahme von Baumaterial und Beschichtungsmittel zum gleichmäßigen Verteilen von Baumaterial, wie beispielsweise Beschichtermesser, Rollen oder dgl., aufweist.

Die Vorrichtung 1 weist zudem eine Speichervorrichtung 10 auf, auf der Baudaten abgelegt sind, die die dreidimensionale Gestalt des herzustellenden Objektes bzw. des herzustellenden Bauteils charakterisieren.

Die Abtasteinrichtung 6 und die Laserstrahlungsquelle 3 sind über eine Steuerungseinrichtung 11 mit der Speichereinrichtung 10 verbunden, sodass Prozessparameter der Laserstrahlquelle 2 und somit der Abtastpfad des Laserstrahls 3 gemäß der das Objekt charakterisierende Baudaten steuerbar sind.

Ein thermographischer Detektor 12 ist oberhalb der Bestrahlungsebene 5 zur Erfassung von Temperaturprofilen von bestrahlten Schichten angeordnet. Der thermographische Detektor 12 ist über die Steuerungseinrichtung 11 mit der Speichereinrichtung 10 verbunden, sodass Datensätze, die Temperaturprofile von bestrahlten Schichten charakterisieren, zur späteren Auswertung durch die Steuereinrichtung auf die Speichereinrichtung ablegbar sind. Die von dem thermographischen Detektor 12 erfassten Datensätze umfassen Bilddaten, welche über eine Anzeigeeinheit 13, die beispielsweise ein LC(Liquid Cristal)-Display umfasst, anzeigbar sind.

In dem in Figur 1 gezeigten Ausführungsbeispiel ist der thermographische Detektor 12 stationär angeordnet und mit einem Erfassungsbereich 13 ausgestattet, der die gesamte Bestrahlungsebene 5 beinhaltet. Der thermographische Detektor 12, die Speichereinrichtung 10, die Steuerungseinrichtung 11, die Abtasteinrichtung 6 und die Laserstrahlungsquelle 2 stehen derart in einer Wirkverbindung, dass der Abtastpfad des Laserstrahls 3 und weitere Prozessparameter wie insbesondere die Abtastgeschwindigkeit des Laserstrahls, die Größe des Fokuspunktes, die Laserpulsfrequenz, die Laserpulsdauer und/oder die Laserleistung in Abhängigkeit der erfassten Temperaturprofile steuerbar sind.

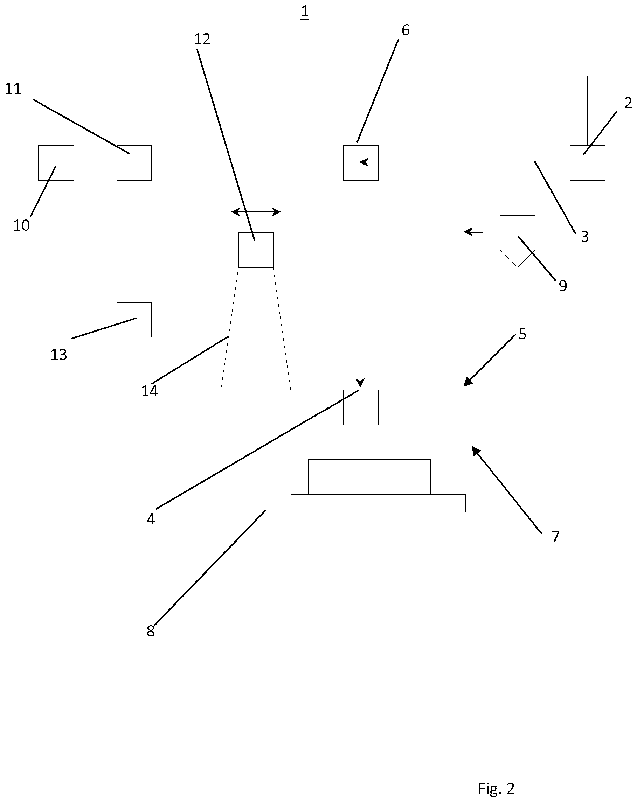

Figur 2 zeigt einen schematischen Aufbau eines zweiten Ausführungsbeispiels der Erfindung. Wesentlichen Komponenten entsprechen dabei der bereits in Bezug auf Figur 1 beschriebenen Teile, sodass im Folgenden lediglich auf die Unterschiede eingegangen werden.

Im Gegensatz zum ersten Ausführungsbeispiel ist der thermographische Detektor 12 beweglich gelagert und in Art eines Skankopfes über die gesamte Bestrahlungsebene 5 verschiebbar. Der Erfassungsbereich 14 des Detektors 12 überdeckt zu einem gegebenen Zeitpunkt lediglich einen Teil der Bestrahlungsebene 5. Der thermographische Detektor 12 ist unabhängig von der Abtasteinrichtung 6 bewegbar, sodass auch Bereiche der Bestrahlungsebene 5 erfasst werden können, die sich außerhalb einer unmittelbaren Umgebung des Fokuspunktes 4 befinden.

Bei einem Verfahren zum Herstellen des dreidimensionalen Bauteils bzw. des dreidimensionalen Objekts durch das Laserschmelzverfahren erfolgt eine schichtweise Auftragung von pulverförmigen Baumaterial und schichtweise Verfestigung des Baumaterials an den dem Querschnitt des Bauteils entsprechenden Stellen. Nach Beendigung eines Bestrahlungsvorgangs wird die Bauplattform 8 abgesenkt, um eine Auftragung der nächsten Schicht aus unverfestigtem Baumaterial zu ermöglichen.

Es ist vorgesehen, mittels des Detektors 12 thermographische Datensätze zu erfassen, die die Temperaturprofile der soeben bestrahlten Schicht ggf. unter Berücksichtigung aller Temperaturprofile der darunter angeordneten Schichten charakterisieren. Entsprechend alternativer Ausführungsformen werden diese Datensätze zeitgleich mit einem in der Baukammer 7 stattfindenden Bestrahlungsvorgang erfasst oder zu einem Zeitpunkt erfasst, nachdem eine Schicht bestrahlt worden ist und bereits eine darüberliegende Schicht aus unverfestigtem Baumaterial aufgetragen wurde. Anhand der thermographischen Datensätze wird die Bestrahlung der oberen Schicht derart gesteuert, dass der Abtastpfad des Laserstrahls 3 in Abhängigkeit der die unter der oberen Schicht liegenden Schicht bzw. Schichten charakterisierenden Temperaturprofile gewählt wird. Insbesondere ist vorgesehen, den Abtastpfad derart zu führen, dass heiße Bereiche später bestrahlt werden, um eine zwischenzeitliche Angleichung der Temperaturgradienten zu ermöglichen. Damit soll eine übermäßige bereichsweise Erhitzung vermieden werden.

Zur Erzeugung weitgehend homogener Temperaturprofile ist vorgesehen, weitere Prozessparameter entsprechend der erfassten thermographischen Datensätze anzupassen. So wird ein vom Laserstrahl vermittelter Energieeintrag pro Flächeneinheit ggf. in Bereichen hoher Temperatur dadurch reduziert, dass die Abtastgeschwindigkeit des Laserstrahls, die Größe des Fokuspunktes, die Laserpulsfrequenz, die Laserpulsdauer und/oder die Laserleistung entsprechend verändert wird.

Während des Herstellungsprozesses werden die Bilddaten, welche in den thermographischen Datensätzen beinhaltet sind über die Anzeigeeinheit 13 ausgegeben, sodass ggf. ein manueller Eingriff von Bedienpersonal ermöglicht ist. Das Verfahren zur Erzeugung weitgehend homogener Temperaturprofile ist jedoch dazu geeignet, vollautomatisch durchgeführt zu werden, wozu die Steuerungseinrichtung 11 mit einer entsprechenden Auswerteelektronik ausgestattet ist.

Zusätzlich zur Anpassung von Prozessparametern und des Abtastpfades ist vorgesehen, bei einer ggf. zu hohen bereichsweisen Hitzeeinwirkung den Beginn der Bestrahlung eines Abschnitts der oberen Schicht zu verzögern. Werden bei der thermographischen Erfassung Bereiche hoher Temperatur registriert, so wird eine Bestrahlung der oberen Schicht so lange verzögert, bis die Temperatur unter einen vorgebbaren Schwellwert gesunken ist.

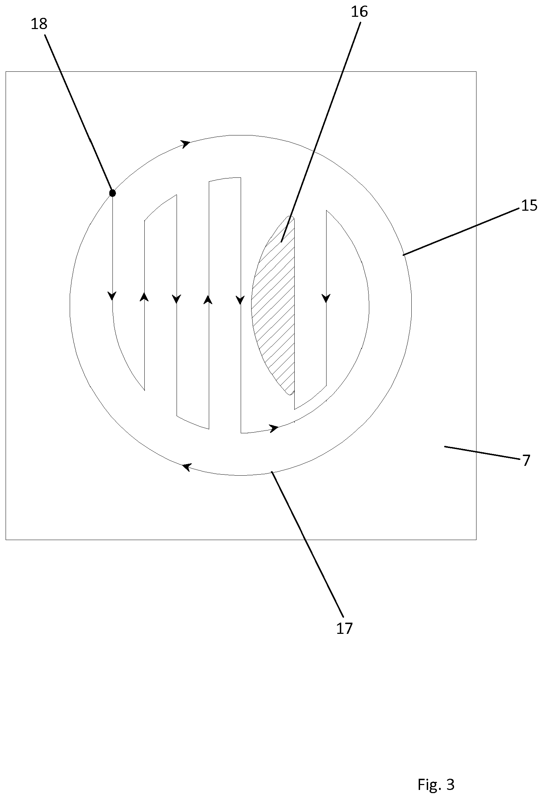

Figur 3 zeigt schematisch die Bestrahlungsebene 5 mit aufgetragener Schicht aus unverfestigtem Baumaterial 7 in einer Draufsicht. Eine Kontur 15 entspricht dem Umriss eines Querschnitts des herzustellenden Bauteils. Desweiteren ist ein Bereich 16 in Figur 3 schraffiert dargestellt, der einem von dem Detektor 12 registrierten Bereich erhöhter Temperatur entspricht. Um eine zu starke lokale Aufschmelzung des pulverförmigen Baumaterials 7 zu vermeiden, wird der Abtastpfad 17 derart gewählt, dass der Bereich 16 zunächst ausgelassen wird. Ausgehend vom Ausgangspunkt 18 wird der Laserstrahl zunächst entlang der Kontur 15 geführt, bis der Fokuspunkt des Laserstrahls 3 an den Ausgangspunkt 8 zurückkehrt. Danach wir der Fokus entlang des in Figur 3 gezeigten zick-zack-förmigen Abtastpfades 17 geführt, bis die Querschnittsfläche des herzustellenden Objektes mit Ausnahme des Bereiches 16 vollständig überdeckt wurde. Erst dann erfolgt in nicht näher dargestellter Weise die Bestrahlung des Bereiches 16, welcher sich in der Zwischenzeit abgekühlt hat.

Es versteht sich, dass der Abtastpfad 17 nicht notwendigerweise einen zusammenhängenden Pfad, wie in Figur 3 gezeigt beschreiben muss. So können beispielsweise auch Bereiche der Bestrahlungsebene 5 nacheinander bestrahlt werden, die räumlich voneinander getrennt angeordnet sind.

Ferner sind Kombinationen aus den gezeigten Ausführungsbeispielen im Rahmen der vorliegenden Erfindung möglich und vorhergesehen. Insbesondere können mehrere - stationäre oder beweglich gelagerte - thermographische Detektoren 12 zur Erfassung der thermographischen Datensätze angeordnet werden.

### BEZUGSZEICHENLISTE

- 1: Vorrichtung
- 2: Laserstrahlungsquelle
- 3: Laserstrahl
- 4: Fokuspunkt
- 5: Bestrahlungsebene
- 6: Abtasteinrichtung
- 7: Baukammer
- 8: Bauplattform
- 9: Pulverbeschichtungssystem
- 10: Speichereinrichtung
- 11: Steuerungseinrichtung
- 12: thermographischer Detektor
- 13: Anzeigeeinheit
- 14: Erfassungsbereich
- 15: Kontur
- 16: Bereich
- 17: Abtastpfad
- 18: Ausgangspunkt

## Patentansprüche

1. Verfahren zum Herstellen eines dreidimensionalen Bauteils durch ein Elektronenstrahl-, Lasersinter- oder Laserschmelzverfahren, bei welchem das Bauteil durch aufeinanderfolgendes Verfestigen vorgegebener Abschnitte einzelner Schichten aus durch Einwirkung einer Elektronen- oder Laser-Strahlungsquelle (2) verfestigbarem Baumaterial durch Aufschmelzen des Baumaterials erfolgt, wobei bei Herstellung der Schichten thermografische Datensätze erfasst werden, die jeweils ein Temperaturprofil der jeweiligen Schicht zumindest abschnittsweise charakterisieren und die Bestrahlung der Schichten mittels eines Elektronen- oder Laserstrahls (3) erfolgt, welcher in Abhängigkeit der erfassten thermografischen Datensätze derart gesteuert wird, dass ein weitgehend homogenes Temperaturprofil erzeugt wird,
**dadurch gekennzeichnet, dass**
zur Bestrahlung einer oberen Schicht ein Fokuspunkt (4) des Elektronen- oder Laserstrahls (3) entlang eines Abtastpfades (17) geführt wird, der in Abhängigkeit des das Temperaturprofil der unmittelbar darunter liegenden Schicht zumindest abschnittsweise charakterisierende Datensatzes oder in Abhängigkeit der die Temperaturprofile der darunter liegenden Schichten zumindest abschnittsweise charakterisierenden Datensätze gewählt wird, wobei
zur Generierung der Datensätze eine thermographische Erfassung der Bestrahlungsebene vorgesehen ist.

2. Verfahren nach Anspruch 1,
**dadurch gekennzeichnet, dass**
die Bestrahlung der oberen Schicht derart gesteuert wird, dass einer von der Elektronen- oder Laserstrahlungsquelle (2) vermittelter Energieeintrag pro Flächenabschnitt auf die obere Schicht in Abhängigkeit des das Temperaturprofil der unmittelbar darunter liegenden Schicht zumindest abschnittsweise charakterisierenden Datensatzes oder in Abhängigkeit der die Temperaturprofile der darunter liegenden Schichten zumindest abschnittsweise charakterisierende Datensätze angepasst wird.

3. Verfahren nach Anspruch 2,
**dadurch gekennzeichnet, dass**
zur Anpassung des Energieeintrags pro Flächenabschnitt eine Abtastgeschwindigkeit der Laserstrahlungsquelle (2), eine Größe des Fokuspunktes (4), eine Laserpulsfrequenz, eine Laserpulsdauer und/oder eine Laserleistung angepasst wird.

4. Verfahren nach einem der vorhergehenden Ansprüchen,
**dadurch gekennzeichnet, dass**
der Beginn der Bestrahlung eines Abschnitts der oberen Schicht um ein Zeitintervall verzögert wird, welches in Abhängigkeit des das Temperaturprofil der unmittelbar darunter liegenden Schicht zumindest abschnittsweise charakterisierende Datensatzes oder in Abhängigkeit der die Temperaturprofile der darunter liegenden Schichten zumindest abschnittsweise charakterisierenden Datensätze gewählt wird.

5. Verfahren nach Anspruch 4,
**dadurch gekennzeichnet, dass**
die Bestrahlung des Abschnitts der oberen Schicht so lange verzögert wird, bis die Temperatur des Abschnitts der oberen Schicht unter einen vorgebbaren Schwellwert gesunken ist.

6. Verfahren nach einem der vorhergehenden Ansprüchen,
**dadurch gekennzeichnet, dass** der das Temperaturprofil der jeweiligen Schicht charakterisierende Datensatz abschnittsweise mittels eines beweglich gelagerten thermographischen Detektors (12) erfasst wird, welcher über die gesamte Bestrahlungsfläche (5) bewegbar ist.

7. Verfahren nach einem der Ansprüchen 1 bis 5,
**dadurch gekennzeichnet, dass**
der das Temperaturprofil der jeweiligen Schicht charakterisierende Datensatz mittels eines stationären thermographischen Sensors (12) mit einem die gesamte Bestrahlungsfläche (5) umfassenden Erfassungsbereich (14) erfasst wird.

8. Verfahren nach einem der vorhergehenden Ansprüchen,
**dadurch gekennzeichnet, dass**
die thermografischen Datensätze Bilddaten umfassen, welche über eine Anzeigeeinheit (13) ausgegeben werden.

9. Verfahren nach einem der vorhergehenden Ansprüchen,
**dadurch gekennzeichnet, dass**
der das Temperaturprofil der jeweiligen Schicht charakterisierende Datensatz bei Bestrahlung der jeweiligen Schicht erfasst wird.

10. Verfahren nach einem der Ansprüchen 1 bis 9,
**dadurch gekennzeichnet, dass**
der das Temperaturprofil der jeweiligen Schicht charakterisierende Datensatz erfasst wird, nachdem die jeweilige Schicht bestrahlt wurde und nachdem eine Pulverschicht aus unverfestigtem Baumaterial aufgetragen wurde, aus dem die darauffolgende Schicht des Bauteils in einem darauffolgenden Verfahrensschritt zu bilden ist.

11. Verfahren nach einem der Ansprüchen 1 bis 9,
**dadurch gekennzeichnet, dass**
die thermographischen Datensätze wenigstens eines Bauteils in einer Speichereinrichtung abgespeichert werden und wenigstens einer der thermographischen Datensätze verwendet wird, die Bestrahlung einer Schicht eines zeitlich später angefertigten Bauteils zu steuern.

12. Verfahren nach Anspruch 11,
**dadurch gekennzeichnet, dass**
die Bestrahlung einer Schicht eines zeitlich später angefertigten Bauteils in Abhängigkeit der thermographischen Datensätze wenigstens zweier vorher angefertigter Bauteile gesteuert wird.

13. Verfahren nach Anspruch 12,
**dadurch gekennzeichnet, dass**
die wenigstens zwei vorher angefertigten Bauteile gleichzeitig oder nacheinander angefertigt werden.

14. Vorrichtung (1) zur selektiven Laserpulververarbeitung, welche dazu ausgebildet ist, ein Verfahren nach einem der vorhergehenden Ansprüchen auszuführen, wobei die Vorrichtung (1)
- eine Bauplattform (8) zur Aufnahme eines Pulverbetts aus verfestigbarem Baumaterial,
- ein Pulverbeschichtungssystem (9) zum Auftragen einer Pulverschicht auf die Bau plattform,
- eine Laserstrahlungsquelle (2) zur Bereitstellung eines fokussierten Laserstrahls (3), der auf die Pulverschicht zur selektiven Verfestigung des Baumaterials auftrifft,
- eine Abtasteinrichtung (6) zur Führung des fokussierten Laserstrahls (3) entlang eines Abtastpfades (17),
- einen thermografischen Detektor (12) zur Erfassung von Datensätzen, welche Temperaturprofile von aus verfestigtem Baumaterial bestehende Schichten zumindest abschnittsweise charakterisieren, und
- eine Steuerungseinrichtung (11) zur Steuerung der Laserstrahlungsquelle in Abhängigkeit der erfassten Datensätze umfasst,
**dadurch gekennzeichnet, dass**
in einer Speichereinrichtung (10) die Datensätze ablegbar sind, wobei die Speichereinrichtung (10) derart in einer Wirkverbindung mit der Steuerungseinrichtung (11) und der Abtasteinrichtung (6) steht, dass der Abtastpfad (17) zur Herstellung einer oberen Schicht in Abhängigkeit des Datensatzes steuerbar ist, der das Temperaturprofil der unmittelbar unter der zu bestrahlenden oberen Schicht liegenden Schicht zumindest abschnittsweise charakterisiert oder der Abtastpfad in Abhängigkeit der Datensätze steuerbar ist, die die Temperaturprofile der unter der zu bestrahlenden oberen Schicht liegenden Schichten zumindest abschnittsweise charakterisieren.

15. Vorrichtung nach Anspruch 14,
**dadurch gekennzeichnet, dass**
zur Erfassung des das Temperaturprofil der jeweiligen Schicht charakterisierenden Datensatzes ein beweglich gelagerter thermographischer Detektor (12) vorgesehen ist, welcher nach Art eines Scankopfes über die gesamte Bestrahlungsfläche (5) unabhängig von der Bewegung der Abtasteinrichtung (6) bewegbar ist.

## Claims

1. Method for producing a three-dimensional component by means of an electron beam process, laser sintering process or laser melting process, in which method the component is created by successively hardening predetermined portions of individual layers consisting of building material that can be hardened by the action of an electron or laser radiation source (2) by melting the building material, thermographic data sets being recorded while the layers are produced, each of which sets characterizes, at least in portions, a temperature profile of the particular layer, and the layers being irradiated by means of an electron or laser beam (3) which is controlled depending on the recorded thermographic data sets such that a largely homogeneous temperature profile is produced, **characterized in that** in order to irradiate a top layer, a focal point (4) of the electron or laser beam (3) is guided along a scanning path (17) that is selected depending on the data set that characterizes, at least in portions, the temperature profile of the layer immediately below or depending on the data sets that characterize, at least in portions, the temperature profiles of the layers below, thermographic recording of the radiation level being provided to generate the data sets.

2. Method according to claim 1, **characterized in that** the irradiation of the top layer is controlled such that an energy input per surface portion that is imparted by the electron or laser radiation source (2) onto the top layer is adapted depending on the data set that characterizes, at least in portions, the temperature profile of the layer immediately below or depending on the data sets that characterize, at least in portions, the temperature profiles of the layers below.

3. Method according to claim 2, **characterized in that** a scanning speed of the laser radiation source (2), a size of the focal point (4), a laser pulse frequency, a laser pulse duration and/or a laser power is adapted so as to adapt the energy input per surface portion.

4. Method according to any of the preceding claims, **characterized in that** the start of the irradiation of a portion of the top layer is delayed by a time interval that is selected depending on the data set that characterizes, at least in portions, the temperature profile of the layer immediately below or depending on the data sets that characterize, at least in portions, the temperature profiles of the layers below.

5. Method according to claim 4, **characterized in that** the irradiation of the portion of the top layer is delayed until the temperature of the portion of the top layer has fallen below a predefinable threshold.

6. Method according to any of the preceding claims, **characterized in that** the data set that characterizes the temperature profile of the particular layer is recorded in portions by means of a movably mounted thermographic detector (12) that can be moved over the entire irradiation surface (5).

7. Method according to any of claims 1 to 5, **characterized in that** the data set that characterizes the temperature profile of the particular layer is recorded by means of a stationary thermographic sensor (12) having a recording region (14) that encompasses the entire irradiation surface (5).

8. Method according to any of the preceding claims, **characterized in that** the thermographic data sets include image data which are output via a display unit (13).

9. Method according to any of the preceding claims, **characterized in that** the data set that characterizes the temperature profile of the particular layer is recorded while the particular layer is irradiated.

10. Method according to any of claims 1 to 9, **characterized in that** the data set that characterizes the temperature profile of the particular layer is recorded after the particular layer has been irradiated and after the application of a powder layer consisting of unhardened building material from which the subsequent layer of the component is to be formed in a subsequent method step.

11. Method according to any of claims 1 to 9, **characterized in that** the thermographic data sets of at least one component are stored in a memory device and at least one of the thermographic data sets is used to control the irradiation of a layer of a component that is manufactured later in time.

12. Method according to claim 11, **characterized in that** the irradiation of a layer of a component manufactured later in time is controlled depending on the thermographic data sets of at least two previously manufactured components.

13. Method according to claim 12, **characterized in that** the at least two previously manufactured components are manufactured simultaneously or in succession.

14. Apparatus (1) for selective laser powder processing designed to carry out a method according to any of the preceding claims, the apparatus (1) comprising
- a building platform (8) for receiving a powder bed consisting of building material that can be hardened,
- a powder coating system (9) for applying a powder layer to the building platform,
- a laser radiation source (2) for providing a focused laser beam (3) that impinges on the powder layer for the selective hardening of the building material,
- a scanning device (6) for guiding the focused laser beam (3) along a scanning path (17),
- a thermographic detector (12) for recording data sets that characterize, at least in portions, temperature profiles of layers consisting of hardened building material, and
- a control device (11) for controlling the laser radiation source depending on the recorded data sets,
**characterized in that** the data sets can be deposited in a memory device (10), the memory device (10) being operatively connected to the control device (11) and the scanning device (6) such that the scanning path (17) can be controlled so as to produce a top layer depending on the data set that characterizes, at least in portions, the temperature profile of the layer immediately below the top layer to be irradiated or the scanning path can be controlled depending on the data sets that characterize, at least in portions, the temperature profiles of the layers below the top layer to be irradiated.

15. Apparatus according to claim 14, **characterized in that** a movably mounted thermographic detector (12) is provided for recording the data set that characterizes the temperature profile of the particular layer, which detector can be moved over the entire irradiation surface (5) in a scanhead-like manner independently of the movement of the scanning device (6).

## Revendications

1. Procédé de fabrication d'un composant tridimensionnel au moyen d'un procédé par faisceau d'électrons, de frittage laser ou de fusion laser, dans lequel le composant est réalisé par la solidification successive de sections prédéterminées de couches individuelles à partir de matériaux de construction qui peuvent être solidifiés par l'action d'une source de rayonnement électronique ou laser (2) par la fonte du matériau de construction, des ensembles de données thermographiques étant enregistrés pendant la production des couches, chacun caractérisant au moins par section un profil de température de la couche respective, et les couches étant irradiées au moyen d'un faisceau d'électrons ou de laser (3) qui est commandé en fonction des ensembles de données thermographiques enregistrées de sorte qu'un un profil de température largement homogène est généré, **caractérisé en ce que,** pour l'irradiation d'une couche supérieure, un point focal (4) du faisceau d'électrons ou de laser (3) est guidé le long d'un chemin de balayage (17), lequel point est sélectionné en fonction de l'ensemble de données caractérisant au moins par section le profil de température de la couche située immédiatement en dessous de celle-ci ou en fonction des ensembles de données caractérisant au moins par section les profils de température des couches situées en dessous de celle-ci, un enregistrement thermographique du niveau de rayonnement étant prévu pour générer les ensembles de données.

2. Procédé selon la revendication 1, **caractérisé en ce que** l'irradiation de la couche supérieure est commandée de sorte qu'un apport d'énergie par section de surface transmis par la source de rayonnement électronique ou laser (2) sur la couche supérieure est adapté en fonction de l'ensemble de données caractérisant au moins par section le profil de température de la couche située immédiatement en dessous de celle-ci ou en fonction des ensembles de données caractérisant au moins par section les profils de température des couches situées en dessous de celle-ci.

3. Procédé selon la revendication 2, **caractérisé en ce qu**'une vitesse de balayage de la source de rayonnement laser (2), une taille du point focal (4), une fréquence d'impulsion laser, une durée d'impulsion laser et/ou une puissance laser sont adaptées pour adapter l'apport d'énergie par section de surface.

4. Procédé selon l'une des revendications précédentes, **caractérisé en ce que** le début de l'irradiation d'une section de la couche supérieure est retardé d'un intervalle de temps qui est choisi en fonction de l'ensemble de données caractérisant au moins par section le profil de température de la couche située immédiatement en dessous de celle-ci ou en fonction des ensembles de données caractérisant au moins par section les profils de température des couches situées en dessous de celle-ci.

5. Procédé selon la revendication 4, **caractérisé en ce que** l'irradiation de la section de la couche supérieure est retardée jusqu'à ce que la température de la section de la couche supérieure tombe en dessous d'un seuil pouvant être prédéfini.

6. Procédé selon l'une des revendications précédentes, **caractérisé en ce que** l'ensemble de données caractérisant le profil de température de la couche respective est enregistré par section au moyen d'un détecteur thermographique (12) placé de manière mobile qui peut être déplacé sur toute la zone d'irradiation (5).

7. Procédé selon l'une des revendications 1 à 5, **caractérisé en ce que** l'ensemble de données caractérisant le profil de température de la couche respective est détecté au moyen d'un capteur thermographique fixe (12) avec une zone de détection (14) englobant toute la zone d'irradiation (5).

8. Procédé selon l'une des revendications précédentes, **caractérisé en ce que** les ensembles de données thermographiques comprennent des données d'image qui sont émises par l'intermédiaire d'une unité d'affichage (13).

9. Procédé selon l'une des revendications précédentes, **caractérisé en ce que** l'ensemble de données caractérisant le profil de température de la couche respective est enregistré lors de l'irradiation de la couche respective.

10. Procédé selon l'une des revendications 1 à 9, **caractérisé en ce que** l'ensemble de données caractérisant le profil de température de la couche respective est enregistré après l'irradiation de la couche respective et après l'application d'une couche de poudre d'un matériau de construction non solidifié à partir duquel la couche suivante du composant doit être formée dans une étape ultérieure de procédé.

11. Procédé selon l'une des revendications 1 à 9, **caractérisé en ce que** les ensembles de données thermographiques d'au moins un composant sont stockés dans un dispositif de mémoire et au moins l'un des ensembles de données thermographiques est utilisé pour commander l'irradiation d'une couche d'un composant produit ultérieurement.

12. Procédé selon la revendication 11, **caractérisé en ce que** l'irradiation d'une couche d'un composant produit ultérieurement est commandée en fonction des ensembles de données thermographiques d'au moins deux composants produits précédemment.

13. Procédé selon la revendication 12, **caractérisé en ce que** les au moins deux composants produits précédemment sont produits simultanément ou successivement.

14. Dispositif (1) de traitement sélectif par poudre laser, qui est conçu pour mettre en œuvre un procédé selon l'une des revendications précédentes, le dispositif (1) comprenant
- une plate-forme de construction (8) pour recevoir un lit de poudre en matériau de construction pouvant être solidifié,
- un système de revêtement en poudre (9) pour appliquer une couche de poudre sur la plate-forme de construction,
- une source de rayonnement laser (2) pour fournir un faisceau laser focalisé (3) qui frappe la couche de poudre pour la solidification sélective du matériau de construction,
- un dispositif de balayage (6) pour guider le faisceau laser focalisé (3) le long d'un chemin de balayage (17),
- un détecteur thermographique (12) pour détecter des ensembles de données qui caractérisent au moins par section les profils de température de couches constituées de matériaux de construction solidifiés, et
- un dispositif de commande (11) pour commander la source de rayonnement laser en fonction des ensembles de données enregistrés,
**caractérisé en ce que** les ensembles de données peuvent être stockés dans un dispositif de stockage (10), le dispositif de stockage (10) étant connecté fonctionnellement au dispositif de commande (11) et au dispositif de balayage (6) de sorte que le chemin de balayage (17) peut être commandé pour produire une couche supérieure en fonction de l'ensemble de données qui caractérise au moins par section le profil de température de la couche située immédiatement en dessous de la couche supérieure à irradier ou que le chemin de balayage peut être commandé en fonction des ensembles de données qui caractérisent au moins par section les profils de température des couches situées en dessous de la couche supérieure à irradier.

15. Dispositif selon la revendication 14, **caractérisé en ce que,** pour détecter l'ensemble de données caractérisant le profil de température de la couche respective, un détecteur thermographique (12) placé de manière mobile est prévu, lequel est amovible à la manière d'une tête de balayage sur toute la zone d'irradiation (5) indépendamment du mouvement du dispositif de balayage (6).
